(19) **Europäisches Patentamt**

**European Patent Office**

**Office européen des brevets**

(11) **EP 1 445 720 A1**

(12) **EUROPEAN PATENT APPLICATION**

(43) Date of publication:
**11.08.2004 Bulletin 2004/33**

(51) Int Cl.7: **G06F 17/60**

(21) Application number: **03258209.0**

(22) Date of filing: **23.12.2003**

| | |
|---|---|
| (84) Designated Contracting States: **AT BE BG CH CY CZ DE DK EE ES FI FR GB GR HU IE IT LI LU MC NL PT RO SE SI SK TR** Designated Extension States: **AL LT LV MK** | (72) Inventor: **Chang, Xin c/o Fujitsu Limited Kawasaki-shi Kanagawa 211-8588 (JP)** |
| (30) Priority: **23.01.2003 JP 2003014830** | (74) Representative: **Hitching, Peter Matthew et al Haseltine Lake, Imperial House, 15-19 Kingsway London WC2B 6UD (GB)** |
| (71) Applicant: **FUJITSU LIMITED Kawasaki-shi, Kanagawa 211-8588 (JP)** | |

(54) **Method and apparatus of generating order guidance information, ordering method and computer-readable storage medium**

(57)     An order guidance generating method automatically generates an order guidance to be used as a reference when placing an order for a merchandise. The order guidance generating method calculates a purchasing index with respect to a target merchandise based on result data indicating a number of target merchandises sold during a past predetermined time interval and a number of arrived customers during the past predetermined time, and generates an order guidance with respect to the target merchandise based on the purchasing index with respect to the target merchandise and an anticipated number of arriving customers during a future predetermined time interval. The purchasing index with respect to the target merchandise indicates a relationship of the number of arrived customers, a number of purchased target merchandises, a price of the target merchandise and/or a gross profit of the target merchandise.

FIG.2

**Description**

BACKGROUND OF THE INVENTION

This application claims the benefit of a Japanese Patent Application No.2003-014830 filed January 23, 2003, in the Japanese Patent Office, the disclosure of which is hereby incorporated by reference.

1. Field of the Invention

The present invention generally relates to order guidance generating methods and apparatuses, ordering methods and computer-readable storage media, and more particularly to an order guidance generating method and an order guidance generating apparatus for automatically generating support and/or recommendation information (hereinafter simply referred to as order guidance) which is used to order target merchandises (or goods) in retail business or the like, an ordering method for ordering merchandises based on generated order guidance, and a computer-readable storage medium which stores a program for causing a computer to order merchandises based on generation of order guidance and/or order guidance.

In retail business, there are demands to accurately and appropriately order the merchandises. If too much merchandises are stocked, it is not only necessary to buy the excessively large stock, but it is troublesome and expensive to store the stock. For example, if the merchandises are extremely large, it becomes necessary to secure an extremely large space to store the merchandises. In addition, if the merchandises are foods with an expiration date ("best if used before"), for example, the merchandises which are not sold before the expiration date will have to be destroyed, thereby generating a loss due to the excess stock.

2. Description of the Related Art

Conventionally, the merchandises are ordered manually by an ordering person (hereinafter simply referred to as a buyer) who is skilled in ordering work. Normally, the merchandises are basically ordered depending on the stock of the merchandises. If the buyer is skilled, it is possible to finely adjust the ordering amount depending on the recent trend of sales of the merchandises and the like, based on experience. However, such a fine adjustment of the ordering amount relies on the buyer, that is, human perception, and is not always accurate and appropriate.

In addition, if there are a plurality of buyers, the ordering amount becomes different for each buyer, even when ordering the same merchandise. For this reason, it is difficult to constantly order appropriate amounts of merchandises and constantly maintain appropriate stocks of the merchandises.

Furthermore, if the buyer is not skilled, the buyer will have to decide the ordering amount of the merchandises solely from the stocks of the merchandises, thereby making it extremely difficult to appropriately order the merchandises and maintain appropriate stocks of the merchandises.

Accordingly, there are demands to automatically generate order guidance that may be used as a guide when ordering the merchandises, so as to enable appropriate order of the merchandises and maintain appropriate stocks of the merchandises.

The inventor is not aware of any prior art document information related to automatic generation of the order guidance.

Therefore, the conventional ordering of the merchandises completely relies on the buyer, that is, human perception, and there were problems in that it is difficult to appropriate order the merchandises unless the buyer is skilled. Moreover, there were problems in that even if the buyer is skilled, it is still difficult to constantly place appropriate orders for the merchandises and to constantly maintain appropriate stocks of the merchandises.

SUMMARY OF THE INVENTION

Accordingly, it is a general object of the present invention to provide a novel and useful order guidance generating method, order guidance generating apparatus, ordering method and computer-readable storage medium, in which the problems described above are eliminated.

Another and more specific object of the present invention is to provide an order guidance generating method, an order guidance generating apparatus, an ordering method and a computer-readable storage medium, which automatically generate order guidance that may be used as a guide when ordering the merchandises, so as to enable appropriate order of the merchandises and maintain appropriate stocks of the merchandises.

Still another object of the present invention is to provide an order guidance generating method for automatically generating an order guidance to be used as a reference when placing an order for a merchandise, comprising a calculation step to calculate a purchasing index with respect to a target merchandise, based on result data indicating a number of target merchandises sold during a past predetermined time interval and a number of arrived customers during the past predetermined time; and a generation step to generate an order guidance with respect to the target merchandise, based on the purchasing index with respect to the target merchandise and an anticipated number of arriving customers during a future predetermined time interval, where the purchasing index with respect to the target merchandise indicates a relationship of the number of arrived customers, a number of purchased target merchandises, a price of the target merchandise and/or a gross profit of the target merchandise. According to the order guidance generating method of the present invention, it is possible to automatically generate the order guidance that may be used as a guide when ordering the merchandises, so as to enable appropriate order of the merchandises and maintain appropriate stocks of the merchandises.

A further object of the present invention is to provide an order guidance generating apparatus for automatically generating an order guidance to be used as a reference when placing an order for a merchandise, comprising a storage unit; calculation means for calculating a purchasing index with respect to a target merchandise, based on result data indicating a number of target merchandises sold during a past predetermined time interval and a number of arrived customers during the past predetermined time, and storing the purchasing index in the storage unit; and generation means for generating an order guidance with respect to the target merchandise, based on the purchasing index with respect to the target merchandise and an anticipated number of arriving customers during a future predetermined time interval, and storing the order guidance in the storage unit, where the purchasing index with respect to the target merchandise indicates a relationship of the number of arrived customers, a number of purchased target merchandises, a price of the target merchandise and/or a gross profit of the target merchandise. According to the order guidance generating apparatus of the present invention, it is possible to automatically generate the order guidance that may be used as a guide when ordering the merchandises, so as to enable appropriate order of the merchandises and maintain appropriate stocks of the merchandises.

Another object of the present invention is to provide an ordering method for ordering a target merchandise based on an order guidance to be used as a reference when placing an order for a merchandise, the order guidance being automatically generated by an order guidance generating apparatus which calculates a purchasing index with respect to a target merchandise based on result data indicating a number of target merchandises sold during a past predetermined time interval and a number of arrived customers during the past predetermined time, and generates an order guidance with respect to the target merchandise based on the purchasing index with respect to the target merchandise and an anticipated number of arriving customers during a future predetermined time interval, the purchasing index with respect to the target merchandise indicating a relationship of the number of arrived customers, a number of purchased target merchandises, a price of the target merchandise and/or a gross profit of the target merchandise, the ordering method comprising a judging step to judge whether or not the order guidance is modified; and a determination step to determine an ordering amount of the target merchandise to a value of the order guidance when the order guidance is not modified, and to determine the ordering amount of the target merchandise to a modified value of the order guidance when the order guidance is modified. According to the ordering method of the present invention, it is possible to enable appropriate order of the merchandises and maintain appropriate stocks of the merchandises.

Still another object of the present invention is to provide a computer-readable storage medium which stores a program for causing a computer to automatically generate an order guidance to be used as a reference when placing an order for a merchandise, the program comprising a calculation procedure causing the computer to calculate a purchasing index with respect to a target merchandise, based on result data indicating a number of target merchandises sold during a past predetermined time interval and a number of arrived customers during the past predetermined time; and a generation procedure causing the computer to generate an order guidance with respect to the target merchandise, based on the purchasing index with respect to the target merchandise and an anticipated number of arriving customers during a future predetermined time interval, where the purchasing index with respect to the target merchandise indicates a relationship of the number of arrived customers, a number of purchased target merchandises, a price of the target merchandise and/or a gross profit of the target merchandise. According to the computer-readable storage medium of the present invention, it is possible to automatically generate the order guidance that may be used as a guide when ordering the merchandises, so as to enable appropriate order of the merchandises and maintain appropriate stocks of the merchandises.

A further object of the present invention is to provide a computer-readable storage medium which stores a program for causing a computer to order a target merchandise based on an order guidance to be used as a reference when placing an order for a merchandise, the order guidance being automatically generated by an order guidance generating apparatus which calculates a purchasing index with respect to a target merchandise based on result data indicating a number of target merchandises sold during a past predetermined time interval and a number of arrived customers during the past predetermined time, and generates an order guidance with respect to the target merchandise based on the purchasing index with respect to the target merchandise and an anticipated number of arriving customers during a future predetermined time interval, the purchasing index with respect to the target merchandise indicating a relationship of the number of arrived customers, a number of purchased target merchandises, a price of the target merchandise and/or a gross profit of the target merchandise, the program comprising a judging procedure causing the computer to judge whether or not the order guidance is modified; and a determination procedure causing the computer to determine an ordering amount of the target merchandise to a value of the order guidance when the order guidance is not modified, and to determine the ordering amount of the target merchandise to a modified value of the order guidance when the order guidance is modified. According to the computer-readable storage medium of the present invention, it is possible to enable appropriate order of the merchandises and maintain appropriate stocks of the merchandises.

Other objects and further features of the present invention will be apparent from the following detailed description when read on conjunction with the accompanying drawings.

BRIEF DESCRIPTION OF THE DRAWINGS

FIG. 1 is a system block diagram showing a structure of a network system to which the present invention may be applied;
FIG. 2 is a flow chart for explaining an operation of a shop server apparatus;
FIG. 3 is a flow chart for explaining an operation of a shop terminal equipment; and
FIG. 4 is a diagram showing an embodiment of an ordering menu.

DESCRIPTION OF THE PREFERRED EMBODIMENTS

A description will be given of embodiments of an order guidance generating method according to the present invention, an order guidance generating apparatus according to the present invention, an ordering method according to the present invention and a computer-readable storage medium according to the present invention, by referring to the drawings.

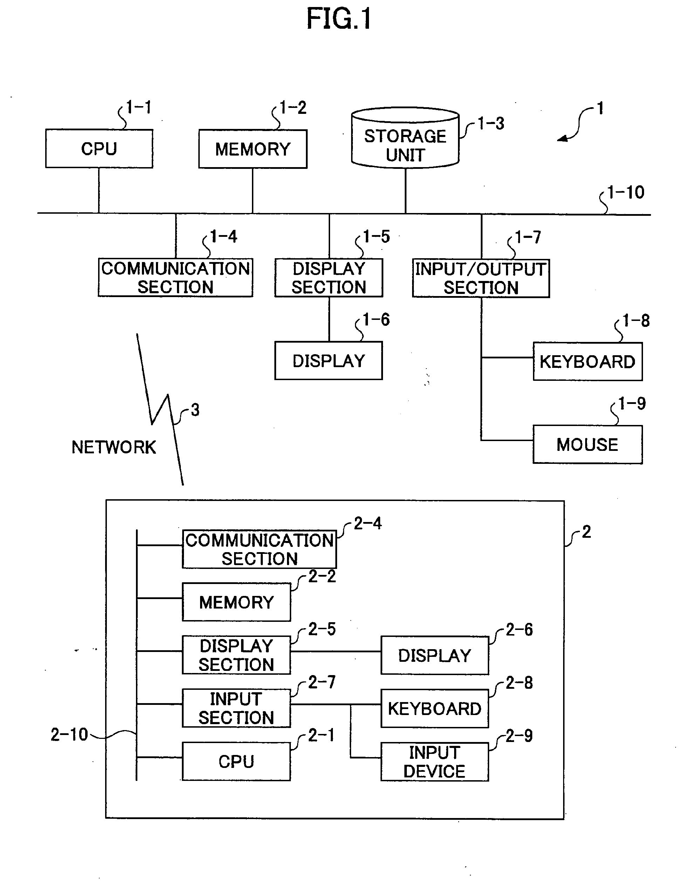

FIG. 1 is a system block diagram showing a structure of a network system to which the present invention may be applied.

In FIG. 1, s shop server apparatus 1 includes a CPU 1-1, a memory 1-2, a storage unit 1-3, a communication section 1-4, a display section 1-6 and an input and output (input/output) section 1-7 which are connected via a bus 1-10. A display 1-6 is connected to the display section 1-5. A keyboard 1-8 and a mouse 1-9 are connected to the input/output section 1-7. The shop server apparatus 1 may be formed by a general purpose computer such as a known personal computer.

The CPU 1-1 controls the general operation of the shop server apparatus 1. The memory 1-2 stores data such as intermediate data obtained during operations performed by the CPU 1-1. The storage unit 1-3 includes a hard disk drive (HDD) or the like, and stores data and programs to be executed by the CPU 1-1. The communication section 1-4 controls communications made via a network 3, under control of the CPU 1-1. The display section 1-5 displays various data and messages on the display 1-6, under control of the CPU 1-1. The input/output section 1-7 forms an interface for inputs and outputs with respect to the shop server apparatus 1. Inputs from the keyboard 1-8 and the mouse 1-9 are input to the CPU 1-1 via the input/output section 1-7 and the bus 1-10. For the sake of convenience, the illustration of a printer is omitted in FIG. 1. However, when connecting the printer to print outputs of the shop server apparatus 1, the printer may be connected to the input/output section 1-7. Of course, the basic structure of the shop server apparatus 1 is not limited to the basic structure shown in FIG. 1, and various known basic structures may be employed instead.

On the other hand, a shop terminal equipment 2 includes a CPU 2-1, a memory 2-2, a communication section 2-4, a display section 2-6 and an input and output (input/output) section 2-7 which are connected via a bus 2-10. A display 2-6 is connected to the display section 2-5. A keyboard 2-8 and an input device 2-9 such as a bar code reader are connected to the input/output section 2-7. The shop terminal equipment 2 may be formed by a general purpose computer such as a known personal computer. The shop terminal equipment 2 may be a desk-top type or a lap-top (portable) type. In addition, a desk-top type shop terminal equipment 2 may be used in common as a Point-Of-Sales (POS) terminal equipment.

The CPU 2-1 controls the general operation of the shop terminal equipment 2. The memory 2-2 stores programs to be executed by the CPU 2-1, and data such as intermediate data obtained during operations performed by the CPU 2-1. The communication section 2-4 controls communications made via the network 3, under control of the CPU 2-1. The display section 2-5 displays various data and messages on the display 2-6, under control of the CPU 2-1. The input/output section 2-7 forms an interface for inputs and outputs with respect to the shop terminal equipment 2. Inputs from the keyboard 2-8 and the input device 2-9 are input to the CPU 2-1 via the input/output section 2-7 and the bus 2-10. For the sake of convenience, the illustration of a printer is omitted in FIG. 1. However, when connecting the printer to print outputs of the shop terminal equipment 2, the printer may be connected to the input/output section 2-7. Of course, the basic structure of the shop terminal equipment 2 is not limited to the basic structure shown in FIG. 1, and various known basic structures may be employed instead.

The communication section 2-4 of the shop terminal equipment 2 is connected to the communication section 1-4 of the shop server apparatus 1 via the network 3. The network 3 may be formed by one or a plurality of networks. The network 3 may be formed by one or more cable networks, one or more wireless networks, or a combination of cable and wireless networks. Further, the network 3 may include a LAN, a WAN, the Internet or the like. Of course the number of shop terminal equipments 2 connected to the network 3 is not limited to one, and a plurality of shop terminal equipments 2 may be connected to the network 3. Only one shop terminal equipment 2 is shown in FIG. 1 for the sake of convenience.

The shop server apparatus 1 employs an embodiment of the order guidance generating method according to the present invention, and forms an embodiment of the order guidance generating apparatus according to the present invention. The shop terminal equipment 2 employs an embodiment of the ordering method according to the present invention. Moreover, the CPU 1-1 of the shop server apparatus 1 and the CPU 2-1 of the shop terminal equipment 2 employ embodiments of the computer-readable storage medium according to the present invention and execute programs stored in the computer-readable storage medium. The computer-readable storage medium may be formed by any recording media capable of storing one or more programs in a computer-readable manner, such as the memory 1-2, the memory 2-2 and the storage unit 1-3. The programs may be downloaded from another computer via the network 3. Semiconductor memory devices, magnetic recording media, optical recording media, and magneto-optical recording media, such as disks, may be used as the recording medium which forms the computer-readable storage medium and stores one or more programs.

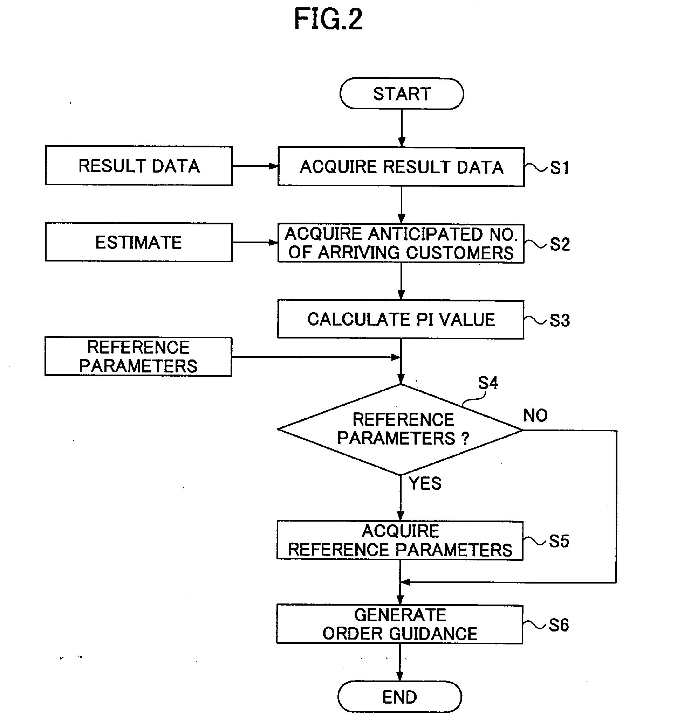

FIG. 2 is a flow chart for explaining an operation of the shop server apparatus 1. In FIG. 2, when an order guidance generating process of the CPU 1-1 is started, a step S1 acquires result data for a past predetermined time interval with respect to a target merchandise, from each of the shop terminal equipments 2 connected to the network 3, and stores the acquired result data in the storage unit 1-3. The result data indicates an amount (a number) of the target merchandise sold. In a case where the shop terminal equipment 2 is used in common as the POS terminal equipment, the sold target merchandise is automatically stored in the shop terminal equipment 2 by using the bar code reader 2-9 to read a bar code which is indicated on the target merchandise purchased by a customer, and the amount of the target merchandise stored in the shop terminal equipment 2 is sent to the shop server apparatus 1 as the result data at an arbitrary timing. The result data can be sent to the shop server apparatus 1 by reading the bar code of the target merchandise, because the bar code includes, in addition to price information of the merchandise, information including identification information which identifies the merchandise. The result data may be sent to the shop server apparatus 1 every time the bar code is read or, at predetermined intervals or, at a timing when an amount of the result data reaches a predetermined amount. In addition, the shop server apparatus 1 may perform a polling operation with respect to each of the shop terminal equipments 2 connected to the network, so as to acquire the result data.

Depending on the merchandise, there are cases where it is necessary to manage the result data independently for each item even if the category of the merchandises are the same. For example, if the category of the merchandises is yogurt, the merchandises cannot be ordered appropriately unless the merchandises are managed independently for each item such as contents (volume), flavor and manufacturer. In this case, each item may be managed as one merchandise. Alternatively, each category may be managed as one merchandise, and a more detailed management may be made by independently managing each item of the merchandise (category). In this specification, it is assumed that the result data may include parameters which are managed in any of the above described manner.

A step S2 acquires an anticipated number of arriving customers who are anticipated to arrive during a predetermined time interval in the future, and stores the anticipated number of arriving customers in the storage unit 1-3. In this case, the predetermined time interval in the future may be in an arbitrary time unit. This arbitrary time unit may be shorter than one day or, longer than one day, depending on the target merchandise. In the retail business, a person in charge of the shop, such as a shop manager, can predict the number of arriving customers with a high accuracy from experience, based on estimate. Accordingly, the anticipated number of arriving customers may be input to the shop server apparatus 1 from the keyboard 1-8 or the like by the person in charge or, input to the shop server apparatus 1 from the keyboard 2-8 or the like of the shop terminal equipment 2 via the network 3 by the person in charge. In addition, the anticipated number of arriving customers may be stored in advance in the storage unit 1-3 or the like of the shop server apparatus 1 depending on the estimate, for each season, each month, each week, each day of week, each time band and the like.

A step S3 calculates a purchasing index PI with respect to the target merchandise, based on the result data for the past predetermined time interval and the number of arrived customers who arrived during the past predetermined time interval, with respect to the target merchandise, and stores the purchasing index PI in the storage unit 1-3. In this case, the past predetermined time interval may be in an arbitrary time unit. This arbitrary time unit may be shorter than one day or, longer than one day, depending on the target merchandise. In the retail business, the person in charge of the shop, such as the shop manager, can predict the number of arrived customers with a high accuracy from experience. Accordingly, the number of arrived customers may be input to the shop server apparatus 1 from the keyboard 1-8 or the like by the person in charge or, input to the shop server apparatus 1 from the keyboard 2-8 or the like of the shop terminal equipment 2 via the network 3 by the person in charge. In addition, the number of arrived customers may be stored in advance in the storage unit 1-3 or the like of the shop server apparatus 1, for each season, each month, each week, each day of week, each time band and the like. The purchasing index PI indicates a relationship of the number of arrived customers with respect to the number of target merchandises purchased, the price of the target merchandise, the gross profit for the target merchandise and the like. The purchasing index PI is also sometimes referred to as a customer support index. The purchasing index PI may be obtained from the following formulas (1) through (3).

$$PI1 = \text{(number of purchased merchandises)/(number of arrived customers)} \times 1000 \qquad (1)$$

$$PI2 = \text{(gross sales)/(number of arrived customers)} \times 1000 \qquad (2)$$

$$PI3 = \text{(gross profit of merchandise)/(number of arrived customers)} \times 1000 \qquad (3)$$

An index PI1 corresponds to the purchasing index PI for the number of merchandises sold, and indicates the number of target merchandises purchased per 1000 arrived customers. An index PI2 corresponds to the purchasing index PI for the gross sales, and indicates the amount (price) of the target merchandises sold per 1000 arrived customers. An index PI3 corresponds to the purchasing index PI for the gross profit, and indicates the gross profit of the target merchandises per 1000 arrived customers. The purchasing index PI for the target merchandise may be obtained based on any of the formulas (1) through (3) described above or, based on a combination of two or more formulas of the formulas (1) through (3). The formulas (1) through (3) may be selected in advance or, selected by an operator on the display 1-6.

A step S4 decides whether or not there are parameters (hereinafter simply referred to as reference parameters) to which a reference is to be made when generating order guidance with respect to the target merchandise. If the decision result in the step S4 is NO, the process advances to a step S6 which will be described later. On the other hand, if the decision result in the step S4 is YES, the process advances to a step S5. The step S5 acquires reference parameters corresponding to the target merchandise, and stores the acquired reference parameters in the storage unit 1-3. Of course, it is possible to acquire only one reference parameter instead of acquiring plural reference parameters, but for the sake of convenience, it is assumed in this embodiment that plural reference parameters are acquired and used. The reference parameters include information for finely adjusting and improving accuracy of the order guidance with respect to the target merchandise, such as weather information, temperature information, day of week information, event information related to events held at the shop, and sale price information on reduced (sale) price of other merchandises of the same category as the target merchandise. The reference parameters may be set independently for each merchandise or, set in common with respect to a plurality of merchandises. The reference parameters may be input to the shop server apparatus 1 from the keyboard 1-8 or the like. In addition, the reference parameters may be input to the shop server apparatus 1 from the keyboard 2-8 or the like of the shop terminal equipment 2 via the network 3. Furthermore, the reference parameters may be stored in advance (prestored) in the storage unit 1-3 or the like of the shop server apparatus 1. After the step S5, the process advances to the step S6.

The step S6 generates the order guidance with respect to the target merchandise, based on the anticipated number of arriving customers and the purchasing index PI, and stores the generated order guidance in the storage unit 1-3. For example, the order guidance indicates an anticipated sales (value) of the target merchandise. In this case, if the reference parameters with respect to the target merchandise were acquired, the step S6 generates the order guidance which has been finely adjusted depending on the reference parameters. For example, if the reference parameters include information which indicates that the temperature is high, it is anticipated that the merchandises such as soft drinks will sell more than usual, and the value of the order guidance with respect to such merchandises which are likely to sell more than usual is subjected to an operation such as a multiplication with a coefficient so as to increase the value of the order guidance and finely adjust the order guidance. The process shown in FIG. 2 ends after the step S6.

The information acquired or calculated in the steps S1 through S3, S5 and S6 shown in FIG. 2 may be displayed on the display 1-6, so that the information is stored in the storage unit 1-3 after the operator confirms the information on the display 1-6 and instructs storage of the information from the keyboard 1-8 or the like. In addition, the step S2 may be carried out before the step S6, and it is not essential for the step S2 to be carried out immediately after the step S1 as shown in FIG. 2.

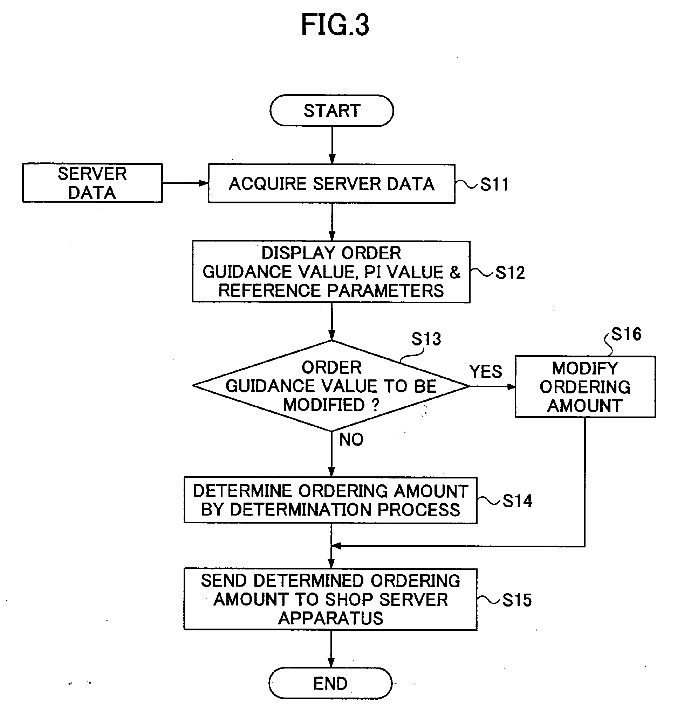

FIG. 3 is a flow chart for explaining an operation of the shop terminal equipment 2. In FIG. 3, when an ordering process of the CPU 2-1 is started, a step S11 acquires server data stored in the storage unit 1-3 of the shop server apparatus 1, via the network 3, and stores the acquired server data in the memory 2-2. The server data includes the anticipated number of arriving customers, the purchasing index PI, the reference parameters and the order guidance. A step S12 displays the acquired server data on the display 2-6.

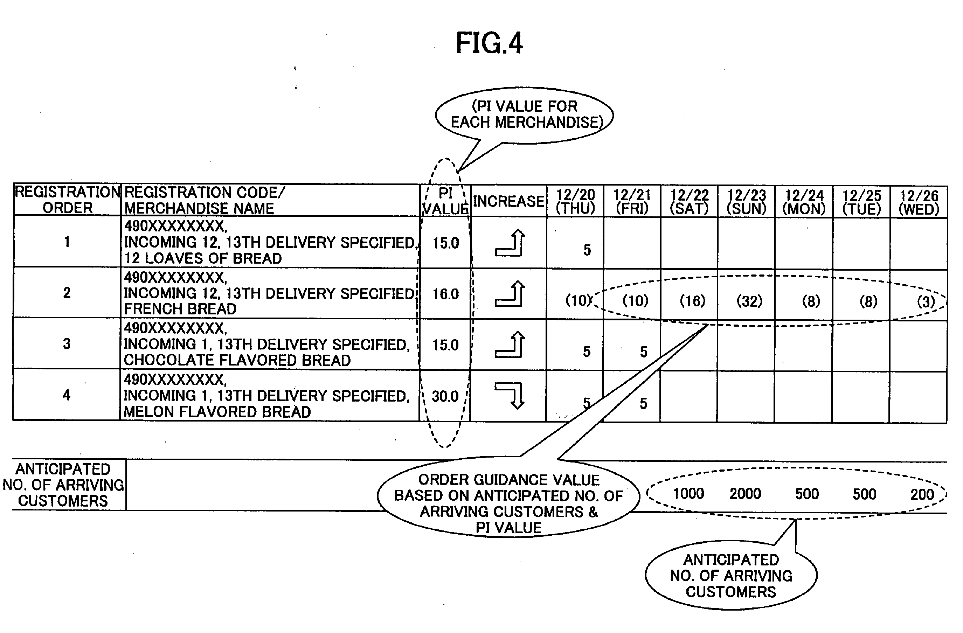

FIG. 4 is a diagram showing an embodiment of an ordering menu (or screen) which is displayed on the display 2-6 by the step S12 shown in FIG. 3. The ordering menu includes columns to display a registration order, a registration code/merchandise (product) name, a PI value, an increase (addition), and a date. The ordering menu also includes a row to display the anticipated number of arriving customers. The "registration order" column displays a number indicating the order which is assigned to the registered merchandise. The "registration code/merchandise name" column displays a registration code and the merchandise name of the merchandise. The "PI value" column displays the purchasing index PI. The "increase" column displays whether or not the value of the order guidance has been increased depending on the reference parameters, and an upwardly pointing arrow indicates that the value of the order guidance has been increased, while a downwardly pointing arrow indicates that the value of the order guidance has been decreased. The "date" column displays dates amounting to one week, for example. In the case shown in FIG. 4, the "date" column displays the dates from 12/20 (Wed) to 12/26 (Thu). The "anticipated number of arriving customers" row displays the anticipated number of arriving customers for each day indicated in the "date" column. Accordingly, for a merchandise having the registration order "1" and the merchandise name "French bread", the PI value is 16.0, the upwardly pointing arrow in the "increase" column indicates that the value of the order guidance has been increased depending on the reference parameters, and since the anticipated number of arriving customers on 12/23 (Sun) is 2000, the order guidance is "(32)". In this case, the operator may set the ordering amount of the "French bread" for 12/23 (Sun) to "32" which is the value of the order guidance or, set the ordering amount by modifying "32" based on experience or the like.

Returning now to the description of FIG. 3, a step S13 decides whether or not the value of the order guidance with respect to the target merchandise displayed on the ordering menu needs to be modified. If the value of the order guidance is to be modified based on experience or the like, the operator instructs this modification from the keyboard 2-8 or the like, and thus, the decision result in the step S13 becomes YES. If the decision result in the step S13 is YES, the process advances to a step S16. The step S16 modifies the value of the order guidance with respect to the target merchandise, based on the input made by the operator from the keyboard 2-8 or the like, and determines the ordering amount of the target merchandise to the modified value of the order guidance. After the step S14, the process advances to a step S15 which will be described later.

On the other hand, if the operator instructs from the keyboard 2-8 or the like that the value of the order guidance is not to be modified or, the instruction to modify the value of the order guidance is not input within a predetermined time, the decision result in the step S13 becomes NO. The process advances to a step S14 if the decision result in the step S13 is NO. The step S14 carries out a determination process to determine the ordering amount of the target merchandise to the value of the order guidance with respect to the target merchandise. The step S15 sends the determined ordering amount of target merchandises to the shop server apparatus 1, via the network 2, and the process shown in FIG. 3 ends.

The shop server apparatus 1 places an order for the target merchandise at an arbitrary time, based on the determined ordering amount, received from the shop terminal equipment 2, with respect to the target merchandise. The order for the target merchandise may be placed by a known method, including a method of creating an order table based on the determined ordering amount with respect to the target merchandise and sending the ordering table which is printed on paper or the like to an ordering destination or, sending the ordering table to the ordering destination by an electronic mail or the like. The shop server apparatus 1 may update information such as the reference parameters, if necessary, based on the determined ordering amount with respect to the target merchandise received from the shop terminal equipment 2.

Therefore, according to this embodiment, the order guidance with respect to the target merchandise is automatically generated in the shop terminal equipment 2. For this reason, even if the operator of the shop terminal equipment 2 is not skilled in the ordering work, it becomes possible to place an appropriate order for the target merchandises and to maintain an appropriate stock of the target merchandises. In addition, if the operator of the shop terminal equipment 2 is skilled in the ordering work, the order guidance which is automatically generated with respect to the target merchandise may be modified based on the skilled operator's experience, so as to place an even more appropriate order for the target merchandises and to maintain an even more appropriate stock of the target merchandises. In other words, it is possible to optimize the orders with respect to the merchandises and to optimize the stocks of the merchandises if the operator of the shop terminal equipment 2 is skilled in the ordering work.

Of course, the ordering process shown in FIG. 3 may be carried out by the shop server apparatus 1.

In the embodiment described above, the present invention is applied to the shop in the retail business, but the application of the present invention is not limited to such. For example, the present invention is similarly applicable to food delivery services or restaurants, where a merchandise such as frozen food is subjected to a simple cooking such as defrosting and/or heating before being delivered or served to the customer.

Further, the present invention is not limited to these embodiments, but various variations and modifications may be made without departing from the scope of the present invention.

**Claims**

1. An order guidance generating method for automatically generating an order guidance to be used as a reference when placing an order for a merchandise, **characterized by**:

   a calculation step to calculate a purchasing index with respect to a target merchandise, based on result data indicating a number of target merchandises sold during a past predetermined time interval and a number of arrived customers during the past predetermined time; and
   a generation step to generate an order guidance with respect to the target merchandise, based on the purchasing index with respect to the target merchandise and an anticipated number of arriving customers during a future predetermined time interval,
   said purchasing index with respect to the target merchandise indicating a relationship of the number of arrived customers, a number of purchased target merchandises, a price of the target merchandise and/or a gross profit of the target merchandise.

2. The order guidance generating method as claimed in claim 1, **characterized in that**:

   said generation step adjusts the order guidance with respect to the target merchandise based on reference parameters corresponding to the target merchandise, and
   said reference parameters include information for improving accuracy of the order guidance with respect to the target merchandise, and include at least one information selected from a group consisting of weather information, temperature information, day of week information, event information related to events held at the shop, and sale price information on reduced price of other merchandises of the same category as the target merchandise.

3. The order guidance generating method as claimed in claim 2, **characterized in that** said reference parameters corresponding to the target merchandise are set independently for each merchandise or, set in common with respect to a plurality of merchandises.

4. The order guidance generating method as claimed in claim 1, **characterized in that** said calculation step calculates the purchasing index based on at least one of the following formulas,

$$PI1 = (\text{number of purchased}$$

$$\text{merchandises})/(\text{number of arrived customers}) \times 1000$$

$$PI2 = (\text{gross sales})/(\text{number of arrived}$$

$$\text{customers}) \times 1000$$

$$PI3 = (\text{gross profit of merchandise})/(\text{number of}$$

$$\text{arrived customers}) \times 1000$$

where an index PI1 indicates a number of target merchandises purchased per 1000 arrived customers, an index PI2 indicates an amount of target merchandises sold per 1000 arrived customers, and an index PI3 indicates a gross profit of the target merchandises per 1000 arrived customers.

5. The order guidance generating method as claimed in claim 1, which is carried out in a network system having a server apparatus and at least one terminal equipment which are coupled via a network, **characterized in that**:

said calculation step and said generation step are carried out within the server apparatus, and
at least said result data is input from the terminal equipment via the network.

6. An order guidance generating apparatus for automatically generating an order guidance to be used as a reference when placing an order for a merchandise, **characterized by**:

a storage unit;
calculation means for calculating a purchasing index with respect to a target merchandise, based on result data indicating a number of target merchandises sold during a past predetermined time interval and a number of arrived customers during the past predetermined time, and storing the purchasing index in the storage unit; and
generation means for generating an order guidance with respect to the target merchandise, based on the purchasing index with respect to the target merchandise and an anticipated number of arriving customers during a future predetermined time interval, and storing the order guidance in the storage unit,
said purchasing index with respect to the target merchandise indicating a relationship of the number of arrived customers, a number of purchased target merchandises, a price of the target merchandise and/or a gross profit of the target merchandise.

7. The order guidance generating apparatus as claimed in claim 6, **characterized in that**:

said generation means includes means for adjusting the order guidance with respect to the target merchandise based on reference parameters corresponding to the target merchandise, and
said reference parameters include information for improving accuracy of the order guidance with respect to the target merchandise, and include at least one information selected from a group consisting of weather information, temperature information, day of week information, event information related to events held at the shop, and sale price information on reduced price of other merchandises of the same category as the target merchandise.

8. The order guidance generating apparatus as claimed in claim 7, **characterized in that** said reference parameters corresponding to the target merchandise are set independently for each merchandise or, set in common with respect to a plurality of merchandises.

9. The order guidance generating apparatus as claimed in claim 6, **characterized in that** said calculation means calculates the purchasing index based on at least one of the following formulas,

$$PI1 = (number\ of\ purchased\ merchandises)/(number\ of\ arrived\ customers) \times 1000$$

$$PI2 = (gross\ sales)/(number\ of\ arrived\ customers) \times 1000$$

$$PI3 = (gross\ profit\ of\ merchandise)/(number\ of\ arrived\ customers) \times 1000$$

where an index PI1 indicates a number of target merchandises purchased per 1000 arrived customers, an index PI2 indicates an amount of target merchandises sold per 1000 arrived customers, and an index PI3 indicates a gross profit of the target merchandises per 1000 arrived customers.

10. An ordering method for ordering a target merchandise based on an order guidance to be used as a reference when placing an order for a merchandise, said order guidance being automatically generated by an order guidance generating apparatus which calculates a purchasing index with respect to a target merchandise based on result data indicating a number of target merchandises sold during a past predetermined time interval and a number of arrived customers during the past predetermined time, and generates an order guidance with respect to the target merchandise based on the purchasing index with respect to the target merchandise and an anticipated number of arriving customers during a future predetermined time interval, said purchasing index with respect to the target merchandise indicating a relationship of the number of arrived customers, a number of purchased target merchandises, a price of the target merchandise and/or a gross profit of the target merchandise, said ordering method comprising:

a judging step to judge whether or not the order guidance is modified; and
a determination step to determine an ordering amount of the target merchandise to a value of the order guidance when the order guidance is not modified, and to determine the ordering amount of the target merchandise to a modified value of the order guidance when the order guidance is modified.

11. The ordering method as claimed in claim 10, further comprising:

a modifying step to modify the value of the ordering guidance with respect to the target merchandise.

12. The ordering method as claimed in claim 10, which is carried out in a network system having the order guidance generating apparatus and at least one terminal equipment which are coupled via a network, wherein:

said judging step and said determination step are carried out within the terminal equipment; and
said ordering amount is sent to the order guidance generating apparatus via the network.

13. A computer-readable storage medium which stores a program for causing a computer to automatically generate an order guidance to be used as a reference when placing an order for a merchandise, said program comprising:

a calculation procedure causing the computer to calculate a purchasing index with respect to a target merchandise, based on result data indicating a number of target merchandises sold during a past predetermined time interval and a number of arrived customers during the past predetermined time; and
a generation procedure causing the computer to generate an order guidance with respect to the target merchandise, based on the purchasing index with respect to the target merchandise and an anticipated number of arriving customers during a future predetermined time interval,
said purchasing index with respect to the target merchandise indicating a relationship of the number of arrived customers, a number of purchased target merchandises, a price of the target merchandise and/or a gross profit of the target merchandise.

14. The computer-readable storage medium as claimed in claim 13, wherein:

said generation procedure causes the computer to adjust the order guidance with respect to the target merchandise based on reference parameters corresponding to the target merchandise, and
said reference parameters include information for improving accuracy of the order guidance with respect to the target merchandise, and includes at least one information selected from a group consisting of weather information, temperature information, day of week information, event information related to events held at the shop, and sale price information on reduced price of other merchandises of the same category as the target merchandise.

15. The computer-readable storage medium as claimed in claim 14, wherein said reference parameters corresponding to the target merchandise are set independently for each merchandise or, set in common with respect to a plurality of merchandises.

16. The computer-readable storage medium as claimed in claim 13, wherein said calculation procedure causes the computer to calculate the purchasing index based on at least one of the following formulas,

$$PI1 = (number\ of\ purchased$$

$$merchandises)/(number\ of\ arrived\ customers) \times 1000$$

$$PI2 = (gross\ sales)/(number\ of\ arrived$$

$$customers)\ x\ 1000$$

$$PI3 = (gross\ profit\ of\ merchandise)/(number\ of\ arrived\ customers)\ x\ 1000$$

where an index PI1 indicates a number of target merchandises purchased per 1000 arrived customers, an index PI2 indicates an amount of target merchandises sold per 1000 arrived customers, and an index PI3 indicates a gross profit of the target merchandises per 1000 arrived customers.

**17.** The computer-readable storage medium as claimed in claim 13, wherein:

the computer and at least one terminal equipment are coupled via a network within a network system;
said calculation procedure and said generation procedure are carried out within the computer; and
at least said result data is input from the terminal equipment via the network.

**18.** A computer-readable storage medium which stores a program for causing a computer to order a target merchandise based on an order guidance to be used as a reference when placing an order for a merchandise, said order guidance being automatically generated by an order guidance generating apparatus which calculates a purchasing index with respect to a target merchandise based on result data indicating a number of target merchandises sold during a past predetermined time interval and a number of arrived customers during the past predetermined time, and generates an order guidance with respect to the target merchandise based on the purchasing index with respect to the target merchandise and an anticipated number of arriving customers during a future predetermined time interval, said purchasing index with respect to the target merchandise indicating a relationship of the number of arrived customers, a number of purchased target merchandises, a price of the target merchandise and/or a gross profit of the target merchandise, said program comprising:

a judging procedure causing the computer to judge whether or not the order guidance is modified; and
a determination procedure causing the computer to determine an ordering amount of the target merchandise to a value of the order guidance when the order guidance is not modified, and to determine the ordering amount of the target merchandise to a modified value of the order guidance when the order guidance is modified.

**19.** The computer-readable storage medium as claimed in claim 18, wherein said program further comprises:

a modifying procedure causing the computer to modify the value of the ordering guidance with respect to the target merchandise.

**20.** The computer-readable storage medium as claimed in claim 18, wherein:

the order guidance generating apparatus and at least one said computer are coupled via a network within a network system;
said judging procedure and said determination procedure are carried out within the computer; and
said ordering amount is sent to the order guidance generating apparatus via the network.

# FIG.1

# FIG.2

```
                          ┌─────────────┐
                          │    START    │
                          └─────────────┘
                                 │
                                 ▼
┌──────────────────┐   ┌──────────────────────┐
│   RESULT DATA    │──▶│ ACQUIRE RESULT DATA  │∽S1
└──────────────────┘   └──────────────────────┘
                                 │
                                 ▼
┌──────────────────┐   ┌──────────────────────────┐
│     ESTIMATE     │──▶│ ACQUIRE ANTICIPATED NO.  │∽S2
└──────────────────┘   │  OF ARRIVING CUSTOMERS   │
                       └──────────────────────────┘
                                 │
                                 ▼
                       ┌──────────────────────┐
                       │  CALCULATE PI VALUE  │∽S3
┌──────────────────┐   └──────────────────────┘
│    REFERENCE     │──────────▶  │
│   PARAMETERS     │             ▼        S4
└──────────────────┘         ◇ REFERENCE ◇──── NO
                             ◇ PARAMETERS ?◇       │
                                 │ YES             │
                                 ▼                 │
                       ┌──────────────────────┐    │
                       │      ACQUIRE         │∽S5 │
                       │ REFERENCE PARAMETERS │    │
                       └──────────────────────┘    │
                                 │◀────────────────┘
                                 ▼
                       ┌──────────────────────┐
                       │      GENERATE        │∽S6
                       │   ORDER GUIDANCE     │
                       └──────────────────────┘
                                 │
                                 ▼
                          ┌─────────────┐
                          │     END     │
                          └─────────────┘
```

# FIG.3

START

SERVER
DATA → ACQUIRE SERVER DATA ∼S11

DISPLAY ORDER
GUIDANCE VALUE, PI VALUE & ∼S12
REFERENCE PARAMETERS

S13

ORDER
GUIDANCE VALUE TO BE
MODIFIED ?

YES → MODIFY
ORDERING
AMOUNT ⌐S16

NO

DETERMINE ORDERING AMOUNT
BY DETERMINATION PROCESS ∼S14

SEND DETERMINED ORDERING
AMOUNT TO SHOP SERVER ∼S15
APPARATUS

END

# FIG.4

(PI VALUE FOR EACH MERCHANDISE)

| REGISTRATION ORDER | REGISTRATION CODE/ MERCHANDISE NAME | PI VALUE | INCREASE | 12/20 (THU) | 12/21 (FRI) | 12/22 (SAT) | 12/23 (SUN) | 12/24 (MON) | 12/25 (TUE) | 12/26 (WED) |
|---|---|---|---|---|---|---|---|---|---|---|
| 1 | 490XXXXXXXX, INCOMING 12, 13TH DELIVERY SPECIFIED, 12 LOAVES OF BREAD | 15.0 | ⬑ | 5 | | | | | | |
| 2 | 490XXXXXXXX, INCOMING 12, 13TH DELIVERY SPECIFIED FRENCH BREAD | 16.0 | ⬑ | (10) | (10) | (16) | (32) | (8) | (8) | (3) |
| 3 | 490XXXXXXXX, INCOMING 1, 13TH DELIVERY SPECIFIED, CHOCOLATE FLAVORED BREAD | 15.0 | ⬑ | 5 | 5 | | | | | |
| 4 | 490XXXXXXXX, INCOMING 1, 13TH DELIVERY SPECIFIED, MELON FLAVORED BREAD | 30.0 | ⬒ | 5 | 5 | | | | | |

| ANTICIPATED NO. OF ARRIVING CUSTOMERS | | | | | | | | | | |
|---|---|---|---|---|---|---|---|---|---|---|
| | | | | | | 1000 | 2000 | 500 | 500 | 200 |

ORDER GUIDANCE VALUE BASED ON ANTICIPATED NO. OF ARRIVING CUSTOMERS & PI VALUE

ANTICIPATED NO. OF ARRIVING CUSTOMERS

EP 1 445 720 A1

**European Patent Office**

**DECLARATION**

Application Number

which under Rule 45 of the European Patent Convention EP 03 25 8209
shall be considered, for the purposes of subsequent
proceedings, as the European search report

| The Search Division considers that the present application, does not comply with the provisions of the EPC to such an extent that it is not possible to carry out a meaningful search into the state of the art on the basis of all claims | CLASSIFICATION OF THE APPLICATION (Int.Cl.7) |
|---|---|
| Reason: | G06F17/60 |

The claims relate to subject matter excluded from patentability under Art. 52(2) and (3) EPC. Given that the claims are formulated in terms of such subject matter or merely specify commonplace features (e.g. general purpose computer, network and storage medium) relating to its technological implementation, the search examiner could not establish any technical problem which might potentially have required an inventive step to overcome. Hence it was not possible to carry out a meaningful search into the state of the art (Rule 45 EPC). See also Guidelines Part B Chapter VIII, 1-3.

The applicant's attention is drawn to the fact that a search may be carried out during examination following a declaration of no search under Rule 45 EPC, should the problems which led to the declaration being issued be overcome (see EPC Guideline C-VI, 8.5).

-----

| Place of search | Date | Examiner |
|---|---|---|
| Munich | 21 June 2004 | Glaser, N |

EPO FORM 1504 (P04C37)